## Europäisches Patentamt
## European Patent Office
## Office européen des brevets

(11) Numéro de publication: **0 022 061**
**B1**

(12) **FASCICULE DE BREVET EUROPEEN**

(45) Date de publication du fascicule du brevet: **10.10.84**

(51) Int. Cl.³: **G 01 K 7/24, G 01 K 1/20**

(21) Numéro de dépôt: **80810167.9**

(22) Date de dépôt: **22.05.80**

(54) Thermomètre électronique.

(30) Priorité: **07.06.79 CH 5337/79**

(43) Date de publication de la demande:
**07.01.81 Bulletin 81/01**

(45) Mention de la délivrance du brevet:
**10.10.84 Bulletin 84/41**

(84) Etats contractants désignés:
**AT BE CH DE FR GB IT LI LU NL SE**

(56) Documents cités:
**DE-A-2 753 871**

**IEEE TRANSACTIONS ON GEOSCIENCE
ELECTRONICS, GE-9, no. 3, juillet 1971, New
York US J- SMITH et al.: "Rocket-borne RF
capacitance probe for determining electron
densities", pages 178-183**

(73) Titulaire: **Bioself International Inc.
P.O. Box 10496 Shirley Street 50
Nassau, Bahamas (BS)**

(72) Inventeur: **Bellet, Jean-Marie
c/o E. Desjacques 91, Rue de Genève
CH-1226 Thônex GE (CH)**

(74) Mandataire: **Kirker, Gaylord Emile
c/o KIRKER & Cie S.A. 14, Rue du Mont-Blanc
Case postale 872
CH-1211 Genève 1 (CH)**

Courier Press, Leamington Spa, England.

**Description**

L'invention concerne un thermomètre électronique. Le classique thermomètre à mercure donne usuellement une précision satisfaisante, mais présente divers inconvénients, notamment sa lecture est parfois peu commode et présente des risques d'erreurs. On a donc cherché à le remplacer par des dispositifs de mesure électrique ou électronique de la température.

On connaît par exemple le thermocouple; en utilisation, l'une des deux soudures du thermocouple est mise en contact avec la zone dont on veut mesurer la température, et l'autre soudure est mise dans un milieu maintenu à une température précise, connue, par exemple de la glace fondante sous pression normale, fournissant la température de référence 0°C. La mesure de la tension entre les deux soudures indique la différence de température entre les soudures, ce qui permet de connaître la température mesurer par comparaison avec la température de référence. Cependant, la nécessité d'une température de référence constitue un inconvénient.

On connaît une méthode utilisant le fait que les éléments résistifs usuels présentent une résistance variant avec la température. On sait aussi que les semiconducteurs, diodes et transistors, présentent des caractéristiques qui dépendent de la température. De plus, on dispose actuellement sur le marché d'éléments résistifs dont la résistance varie de manière sensible avec la température, selon une caractéristique soit positive, soit négative, mais usuellement on utilise plutôt les éléments à caractéristiques négatives. Une méthode de mesure de la température consiste à mesurer le courant traversant un tel élément sous une tension donnée pour connaître sa résistance, et donc sa température. Il existe différentes variantes de la méthode, mais toutes présentent le même inconvénient de nécessiter une source de référence de tension ou de courant très stable et rès précise.

On connaît aussi une méthode pour mesurer dans une fusée la densité des électrons, exposée dans "IEEE Transactions on Geoscience Electronics, GE-9 No. 3, juillet 1971" sous le titre "Rocket-borne RF capacitance probe for determining electron densities", pages 178—183. Cette méthode utilise deux oscillateurs similaires, soit à Circuit LC soit à circuit en pont RC RI CI. Dans l'un des oscillateurs la qualité diélectrique d'un condensateur est sensible à la densité des électrons et est modifiée par elle. Il en résulte une modification de la fréquence de l'oscillation correspondante. Cette oscillation est mélangée avec l'oscillation de l'oscillateur insensible aux électrons et la différence de ces fréquences est transmise comme modulation d'une fréquence porteuse au sol. Le principe bien connu de comparer une donnée de référence avec une donnée semblable sensible à un paramètre physique est appliquée ici sous forme d'oscillateur.

La valeur sensible au paramètre physique est ici la conductance d'une capacité, et le paramètre physique la densité d'électrons; l'exploitation du résultat se fait à travers un enregistreur magnétique, qui doit restituer l'enregistrement à vitesse lente.

On connaît encore un circuit mesurant la température avec un oscillateur dans lequel une résistance sensible à la température et une résistance insensible à la température sont insérées alternativement comme élément déterminant dans le circuit oscillant et les trains d'ondes successifs ainsi obtenus sont exploités (DE—A—27 53 871). L'utilisation d'un même oscillateur (à l'exclusion de la résistance déterminante pour la fréquence) pour l'oscillation de référence et l'oscillation de mesure améliore la précision. Pourtant le fonctionnement successif comme référence et comme mesure n'élimine pas les perturbations fluctuantes de sorte qu'elles affecteront directement la précision. De plus l'exploitation du résultat décrite dans le brevet cité est compliquée, car elle nécessite des circuits branchant alternativement la résistance de mesure et la résistance de référence dans l'oscillateur, et un calculateur (capable d'additionner, de soustraire, de diviser). Dans une forme d'exécution un compteur bidirectionnel supplémentaire est encore nécessaire.

La présente invention vise à fournir un thermomètre électronique ne nécessitant ni milieu maintenu à une température de référence, ni source de courant ou de tension de référence devant présenter une grande précision et une grande stabilité.

L'invention a pour objet un thermomètre électronique conforme à la revendication 1.

La solution selon l'invention consiste à disposer, au voisinage l'un de l'autre, deux circuits oscillateurs de construction semblable, le premier étant connecté à un élément de résistance variable avec la température et distant et fournissant donc un signal de fréquence $f_x$ dépendant de la température à mesurer $T_x$, l'élément de résistance variable se trouvant dans le capteur et étant à la température à mesurer. Cette fréquence $f_x$ est mesurée par comptage pendant une période dépendant de la fréquence $f_r$ du deuxième oscillateur. Cette fréquence $f_r$ peut présenter une dérive due à une fluctuation de la température $T_a$ des circuits du deuxième oscillateur, ou à une fluctuation de l'alimentation. Mais du fait que les deux circuits oscillateurs sont voisins et semblables, la fréquence $f_x$ est également sujette à une dérive correspondante, de sorte que finalement, lors du comptage, l'effet de la dérive edst pratiquement annulé.

On voit que ceci est tout à fait original par rapport à une solution classique où l'on aurait cherché d'une part à fournir une fréquence de référence parfaitement stable et, d'autre part, à éliminer dans le premier oscillateur toute fluctuation autre que celle provenant de l'élément de résistance variable de mesure, ce qui aurait nécessité une alimentation parfaitement stabilisée et un circuit soigneusement compensé en température ou si possible disposé dans une enceinte à température contrôlée par thermostat. Une telle solution nécessiterait un dispositif complexe et présenterait tous les inconvénients mentionnés plus haut.

La solution selon l'invention permet d'obtenir de manière simple un degré de précision qui autrement nécessiterait des moyens complexes. La solution selon l'invention peut aussi être combinée à des schémas classiques de compensation électronique de la dérive soit de température, soit d'alimentation.

Comme on le voit, la solution selon l'invention permet soit d'atteindre une précision donnée avec des circuits relativement simples, soit d'améliorer sensiblement la précision atteinte par de circuits déjà eux-mêmes construits de manière à réduire l'effet adverse des dérives.

La solution selon l'invention permet de concevoir soit des appareillages plus précis, pour une complexité donnée, que ceux de l'art antérieur, soit des appareillages plus simples et plus commodes et donnant cependant une précision tout à fait satisfaisante. Le thermomètre électronique selon l'invention peut convenir comme instrument de laboratoire, instrument de mesure météorologique, comme thermomètre médical, etc. Le fait que la mesure est obtenue sous forme digitale représente bien entendu un avantage considérable par rapport aux mesures analogiques, du fait qu'on peut afficher le résultat de manière très lisible, et éventuellement l'enregistrer comme donnée sous forme d'un signal digital.

L'invention sera mieux comprise à l'aide de la description de quelques formes de réalisation faite ci-après en référence au dessin sur lequel:

La fig. 1 représente de manière schématique le principe d'un thermomètre électronique selon l'invention,

La fig. 2 représente de manière schématique les circuits du thermomètre électronique,

La fig. 3 montre de manière schématique les circuits d'une autre forme de réalisation du thermomètre électronique selon l'invention, et

La fig. 4 montre l'aspect extérieur d'une forme de réalisation du thermomètre électronique.

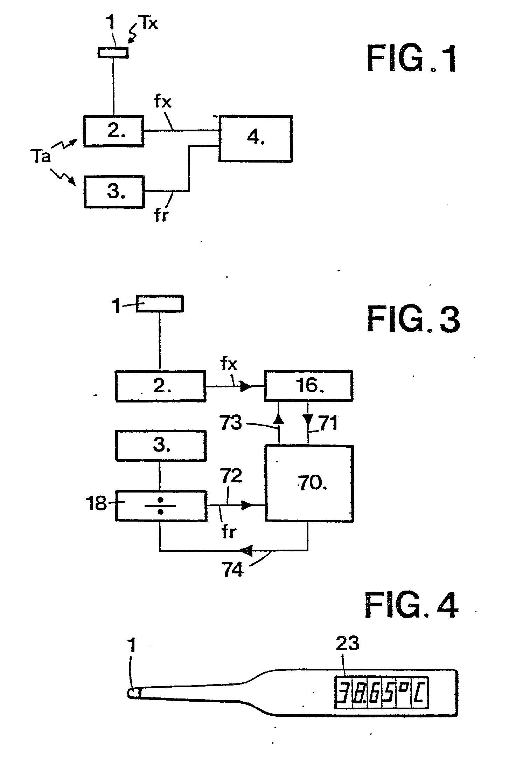

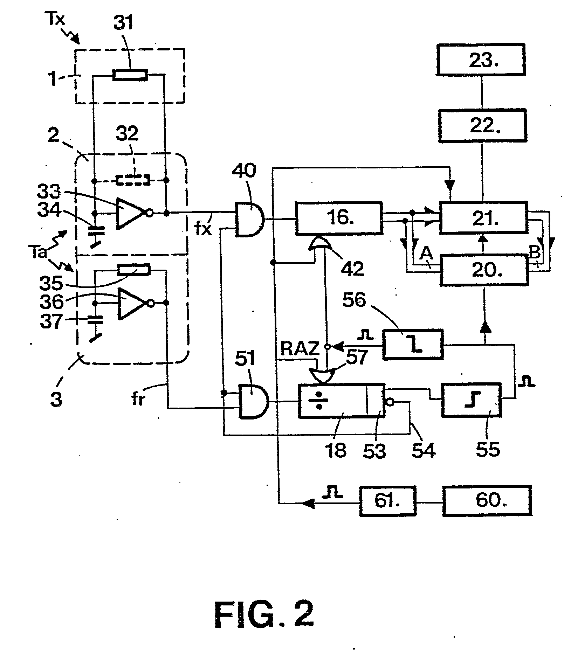

Un thermomètre électronique selon la présente invention comporte, comme le montre la fig. 1, un élément de résistance variable 1 dépendant de la température destiné à être mis en contact avec la zone dont on veut mesurer la température $T_x$, un oscillateur de mesure 2 comportant l'élément de résistance variable 1 et fournissant un signal de fréquence $f_x$ dépendant de $T_x$, et un oscillateur de référence 3 fournissant un signal de fréquence de référence $f_r$; l'oscillateur 3 contient au lieu de l'élément de résistance variable du premier oscillateur une résistance indépendante de la température à mesurer. Les deux oscillateurs 2 et 3 sont voisins et semblables, hormis le fait que le premier comporte l'élément de résistance variable 1, distant des oscillateurs. Les deux oscillateurs 2 et 3 sont donc en principe à la même température $T_a$, le plus souvent la température ambiante, et ils reçoivent la même alimentation électrique. De cette manière, si une dérive de température ou d'alimentation affecte la fréquence $f_r$, le même dérive affecte la fréquence $f_x$ dans le même sens. Les deux fréquences $f_r$ et $f_x$ sont amenées à un ensemble de circuits digitaux 4, dont le fonctionnement est en principe comme ceux de tout circuit logique, pratiquement immunisé contre toute dérive. Dans ces circuits 4, la fréquence $f_x$ est comparée à la fréquence $f_r$, l'effet de la dérive sur les oscillateurs étant pratiquement annulé dans cette comparaison.

Dans les circuits représentés à la fig. 2, l'élément de résistance variable 1 comporte une résistance NTC 31, par exemple de 600 kΩ, avec une caractéristique de 5%/°, soit 30 kΩ/° autour de sa valeur nominale. Cette NTC est reliée au circuit d'un premier oscillateur à relaxation 2 formé d'un trigger inverseur 33 et d'un réseau RC comprenant une capacité 34 et une résistance 32 en parallèle avec la NTC 31. La résistance 32 n'est pas indispensable, notamment dans le cas où la résistance NTC 31 possède une caractéristique bien linéaire dans le domaine utile. L'oscillateur 2 délivre des impulsions logiques à fréquence $f_x$ dépendant de la température $T_x$. Ces impulsions passent, via une porte ET 40, dans un compteur 16.

L'oscillateur de référence 3 est de construction semblable au premier oscillateur 2 et voisin de lui. Cet oscillateur 3 comporte un trigger inverseur 36 et un réseau RC à capacité 37 et résistance 35. L'oscillateur de référence 3 a une fréquence $f_r$ du même ordre de grandeur que $f_x$, par exemple $f_r$ étant la moyenne géométrique entre le maximum et le minimum du domaine utile de $f_x$. Un signal de fréquence $f_r$ est amené, via une porte ET 51 à des moyens de comptage représentés par un diviseur 18 qui divise la fréquence par un nombre représentant l'inverse de la précision relative recherchée pour la mesure. Par exemple, on peut supposer que $f_x$ est de l'ordre de 100'000 Hz, $f_r$ étant pris égal à 100'000 Hz, et que l'on désire une précision de 1 millionième pour le comptage de la fréquence $f_x$, l'étage diviseur étant alors un diviseur de fréquence par un facteur de 1 million, ou voisin d'un million, par exemple $2^{20}$; ($2^{10} = 1024$). Le diviseur 18 se termine par une bascule 53 dont la sortie inversée commande les portes ET 40 et 51, et dont la sortie non inversée commande deux bascules monostables successives 55 et 56, la première servant à l'inscription du résultat du comptage, et la seconde servant à la remise à zéro. La sortie de la seconde bascule 56 aboutit à des portes OU 42 et 57 qui commandent les entrées de mise à zéro du compteur 16 et du diviseur 18 respectivement. Le compteur 16 est relié à une mémoire 21 et à une première entrée A d'un comparateur 20, la seconde entrée B de ce comparateur étant reliée à la mémoire 21.

Le contenu de la mémoire 21 est amené à un décodeur 22 commandant un dispositif d'affichage 23. Le décodeur est agencé pour convertir le contenu numérique de la mémoire 21, qui correspond à un système d'unité tout à fait arbitraire dépendant de l'agencement du circuit, en un contenu numérique correspondant à un système d'unité usuel, et à convertir ce contenu numérique en signaux de commande d'affichage. Comme le thermomètre peut nécessiter une calibration, celle-ci pourrait être faite au niveau du décodeur. Elle pourrait aussi être faite au niveau du diviseur de fréquence 18; la calibration pourrait aussi être faite au niveau des oscillateurs, mais pour une fabrication en grande série il est préférable d'avoir une calibration au niveau des circuits logiques et digitaux plutôt qu'au niveau des circuits analogiques.

Le circuit possède encore un bloc de commande et une alimentation 60. Parmi diverses fonctions, le bloc 60 possède une fonction de mise à zéro initiale du compteur 16, du diviseur 18 et de la mémoire 21. A cette fin, le bloc 60 commande une bascule monostable 61 dont la sortie est reliée à une entrée de mise à zéro de la mémoire 21, et aux portes OU 42 et 57 commandant l'entrée de remise à zéro du compteur 16 et du diviseur 18 respectivement.

Le fonctionnement des circuits de la fig. 2 est le suivant:

Lorsqu'on met en fonction le thermomètre, le circuit 60 alimente et met en fonction les circuits et actionne la bascule 61 qui effectue la mise à zéro initiale du compteur 16, du diviseur 18 et de la mémoire 21. Les deux circuits oscillateurs 2, 3 délivrent des signaux respectivement aux fréquences $f_x$ et $f_r$. Lorsque le diviseur 18 a accompli un cycle, son étage final 53 se met à "1" et la ligne 54 inhibe les portes 40 et 51, ce qui bloque le comptage. En même temps, la première bascule monostable 55 envoie une impulsion de commande, mettant en action le comparateur 20. Si le contenu du compteur 16 est supérieur au contenu de la mémoire 21, le contenu du compteur est inscrit dans la mémoire 21. A la fin de l'impulsion de la première bascule monostable 55, la seconde bascule monostable 56 envoie une impulsion de remise à zéro du compteur 16 et du diviseur 18, y compris son étage terminal 53, ce qui active à nouveau les portes 40 et 51 de sorte qu'un nouveau cycle de mesure commence.

Si la mesure du nouveau cycle donne un résultat supérieur, c'est-à-dire si la température $T_x$ a augmenté, alors l'action du comparateur a pour effet que c'est cette dernière valeur qui est enregistrée. Le thermomètre fonctionne ainsi comme un thermomètre à maximum.

Il y a lieu de remarquer que l'oscillateur de référence 3 est voisin de l'oscillateur de mesure 2 et assez semblable à lui, à l'exception de l'élément NTC 31 évidemment. De plus, ils reçoivent leur alimentation de la même source. Etant voisins, ils sont en principe à la même température $T_a$. Par conséquent, si la fréquence $f_x$ du premier oscillateur, fonction de la température $T_x$, est en outre influencée par une dérive thermique ou une dérive d'alimentation agissant sur l'oscillateur 2, la fréquence de référence $f_r$ est affectée dans le même sens et par la même dérive agissant sur l'oscillateur de référence 3. Dès lors, si par exemple une telle dérive ralentit $f_x$, elle ralentira $f_r$ dans la même proportion, ce qui allongera la durée du comptage, de sorte que finalement l'effet de la dérive sera annulé.

La partie logique du circuit de la fig. 2 est construite à partir d'éléments relativement simples tels que compteurs, portes, registres. Toutefois, pour les fonctions logiques du circuit de la fig. 2, ou a fortiori pour des fonctions plus complexes, on peut préférer faire d'emblée appel à un microprocesseur. Dans le circuit de la fig. 3, on reconnaît l'élément de résistance variable 1 connecté à l'oscillateur de mesure 2, lequel est relié au compteur 16, et on reconnaît également l'oscillateur de référence 3 relié au diviseur 18. Le circuit 70 est un circuit à microprocesseur commandant le compteur 16 et le diviseur 18, notamment pour la remise à zéro, par les lignes 73 et 74 respectivement; le circuit 70, d'autre part, reçoit des signaux des circuits 16 et 18 sur ses lignes 73 et 72.

Le circuit à microprocesseur 70 peut être agencé pour effectuer une fonction de comparaison pour ne garder que la température mesurée la plus haute. Il pourrait évidemment être agencé pour assumer des fonctions plus complexes, par exemple enregistrement de maximum et de minimum, voire mémorisation d'une courbe de température en fonction du temps. Un circuit à microprocesseur peut également commander directement un dispositif d'affichage sans l'intermédiaire d'un décodeur. Un tel circuit pourrait aussi se prêter facilement à une calibration effectuée lors de la fabrication, cette calibration intervenant sous la forme d'une modification de contenu de mémoire ou de modifications de connexions logiques, ce qui est préférable à une calibration analogique. A la limite, un circuit à microprocesseur adéquat permettrait même de supprimer le compteur 16 et le diviseur 18; le circuit à microprocesseur correspondrait alors à l'ensemble des circuits digitaux montré sous la référence 4 à la fig. 1.

La fig. 4 montre l'aspect d'une forme de réalisation d'un thermomètre électronique médical. L'élément de résistance variable 1 est placé dans le capteur à l'extrémité d'un prolongement allongé du corps du thermomètre. Sur le côté du thermomètre on distingue un dispositif d'affichage sur lequel apparaît l'indication 38,65°C. Un affichage à six cellules de type "à sept segments", avec point de séparation pour les décimales, permet d'afficher la température au centième près, avec la mention de l'unité choisie, ici °C.

## Revendications

1. Thermomètre électronique comprenant:

i) un corps de sonde terminé par un capteur thermométrique (1) contenant un élément de résistance (31) variable avec la température, l'élément de résistance variable se trouvant à la température du capteur, la température du capteur étant la température à mesurer;

ii) des moyens oscillateurs (1 + 2, 3) comportant cet élément de résistance variable (31) et une résistance (35) indépendante de la température à mesurer, lesdits moyens-oscillateurs délivrant un signal à une première fréquence $(f_x)$ dépendant de cet élément de résistance variable et donc de la température $(T_x)$ à mesurer et un signal à une deuxième fréquence $(f_r)$ de référence dépendant de la résistance (35) indépendante de la température à mesurer;

iii) des premiers moyens de comptage (16) pour compter pendant une certaine période de temps le nombre de cycles du signal à la première fréquence; et

iv) des seconds moyens de comptage (18) reliés à une entrée de contrôle (40) desdits premiers moyens de comptage pour déterminer ladite période de temps;
  caractérisé
  en ce que: lesdits moyens-oscillateurs sont constitués par un premier circuit oscillateur (1 + 2) comportant cet élément de résistance variable et délivrant le signal à la première fréquence $(f_x)$ et par un second circuit oscillateur (3) comportant la résistance (35) indépendante de la température à mesurer et délivrant le signal à la deuxième fréquence $(f_r)$, lesdits deux circuits oscillateurs étant deux circuits séparés travaillant simultanément, de construction identique à part le fait que le second circuit oscillateur contient au lieu de l'élément de résistance variable du premier circuit oscillateur la résistance indépendante de la température à mesurer, positionnés au voisinage l'un de l'autre et alimentés par la même source d'alimentation, de telle manière qu'ils se trouvent dans les même conditions physiques, de façon qu'une variation desdites conditions physiques produit une dérive parallèle desdits deux circuits oscillateurs;
  et en ce que: l'entrée des seconds moyens de comptage (18) est reliée à la sortie du second circuit oscillateur pour contrôler ladite période de temps en dépendance de la deuxième fréquence $(f_r)$ de façon que la valeur dudit nombre de cycles est représentative de la température à mesurer.

2. Thermomètre selon la revendication 1 caractérisé en ce qu'il comporte:

i) des moyens (42, 55, 56, 57) pour remettre à zéro et réactiver les premiers (16) et seconds (18) moyens de comptage;

ii) une mémoire (21) pour mémoriser à la fin desdites périodes de temps ladite valeur du nombre de cycles;

iii) un dispositif d'affichage (23) pour afficher ladite valeur du nombre de cycles mémorisée dans la mémoire (21), cette valeur mémorisée étant de préférence convertie dans une valeur correspondant à un système d'unité standard;

iv) et un comparateur (20) pour comparer en séquence la valeur du nombre de cycles mémorisé avec les valeurs de nombre de cycles successifs, ledit comparateur comportant des moyens qui remplacent dans la mémoire la valeur mémorisée avec une desdites valeurs de nombre de cycles successifs, lorsque celle-ci est plus grande que la valeur mémorisée, de sorte que le thermomètre fonctionne ainsi comme thermomètre à maximum.

## Patentansprüche

1. Elektronischer Thermometer, folgende Teile umfassend:

i) ein mit einem Temperaturdetektor (1) abgeschlossenes Sondenelement, wobei der Temperaturdetektor einen temperaturabhängigen Widerstand (31) enthält, der die Temperatur des Detektors ausweist und wobei die Temperatur des Detektors die zu messende Temperatur darstellt;

ii) Schwinggeneratoren (1 + 2, 3) mit diesem temperaturabhängigen Widerstand (31) und mit einem von dieser zu messenden Temperatur unabhängigen Widerstand (35), wobei diese Schwinggeneratoren ein Signal mit einer ersten Frequenz $(f_x)$ erzeugen, welche von diesem temperaturabhängigen Widerstand und somit von der zu messenden Temperatur abhängt und ein Signal mit einer zweiten Referenzfrequenz $(f_r)$ erzeugen, welche von dem von der zu messenden Temperatur unabhängigen Widerstand abhängt;

iii) erste Zählmittel (16) um während einem gewissen Zeitabschnitt die Periodenanzahl des Signals der ersten Frequenz zu zählen; und

iv) zweite Zählmittel (18), die mit einem Steuereingang (40) der ersten Zählmittel verbunden sind, um den besagten Zeitabschnitt festzulegen;
  dadurch gekennzeichnet,
  dass die besagten Schwinggeneratoren durch eine erste Schwingschaltung (1 + 2), welche diesen temperaturabhängigen Widerstand enthält und das Signal der ersten Frequenz $(f_x)$ liefert, und durch eine zweite Schwingschaltung (3), welche den von der zu messenden Temperatur unabhängigen Widerstand (35) enthält und das Signal der zweiten Frequenz $(f_r)$ liefert, gebildet sind, wobei die zwei besagten Schwingschaltungen zwei separate Schaltungen bilden, die gleichzeitig arbeiten und einen identischen Aufbau aufweisen mit Ausnahme der Tatsache, dass die zweite Schwingschaltung an Stelle des temperaturabhängigen Widerstandes der ersten Schwingschaltung den von der zu messenden Temperatur unabhängigen Widerstand enthält, wobei diese Schaltungen benachbart angeordnet und von der gleichen Energiequelle gespiesen sind, sodass sie sich in den gleichen physikalischen Bedingungen befinden, wodurch eine Aenderung der besagten physikalischen Bedingungen eine gleiche Abwanderung beider besagten Schwingschaltungen bewirkt;

und dass der Eingang der zweiten Zählmittel (18) mit dem Ausgang der zwieten Schwingschaltung verbunden ist, um den besagten Zeitabschnitt in Abhängigkeit von der zweiten Frequenz $(f_r)$ zu steuern, damit die besagte Periodenanzahl die zu messende Temperatur darstellt.

2. Thermometer gemäss Anspruch 1, dadurch gekennzeichnet, dass er folgende Teile umfasst:

i) Mittel (42, 55, 56, 57), um die ersten (16) und zweiten Zählmittel (18) auf Null zu stellen und sie wieder einzuschalten;

ii) ein Gedächtnis (21), um am Ende der besagten Zeitabschnitte die besagte Anzahl Perioden zu speichern;

iii) eine Anzeigevorrichtung (23), um die besagte im Gedächtnis (21) gespeicherte Anzahl Perioden anzuzeigen, wobei diese gespeicherte Anzahl vorzugsweise in einen Wert umgewandelt wird, der einem standardisierten Einheitensystem entspricht;

iv) und ein Komparator (20), um sequentiell die gespeicherte Periodenanzahl mit den Periodenanzahlen sich folgender Zyklen zu vergleichen, wobei der besagte Komparator Mittel enthält, welche im Gedächtnis den gespeicherten Wert durch eine der Periodenanzahlen sich folgender Zyklen ersetzt, wenn dieselbe grösser als der gespeicherte Wert ist, sodass das Thermometer als Maximalthermometer arbeitet.

**Claims**

1. An electronic thermometer, comprising:

i) a probe ended by a thermometric sensor (1) provided with a resistance (31) varying with temperature, said variable resistance being at the temperature of the probe, which is the temperature to be measured;

ii) oscillating means (1 + 2, 3) including said variable resistance (31) and a resistance (35) independent of the temperature to be measured, said oscillating means delivering a signal having a first frequency $(f_x)$, which is function of the variable resistance and therefore of the temperature $(T_x)$ to be measured, and a reference signal having a second frequency $(f_r)$ which is function of the resistance (35) and therefore independent of the temperature to be measured;

iii) first computer means (16) for counting the number of cycles of the signal having the first frequency during a defined period of time; and

iv) second computer means (18) connected to the input (40) of the first computer means for measuring said defined period of time;

characterized in that:

said oscillating means are comprised of a first oscillating circuit (1 + 2) with said variable resistance as a component and delivering the signal having the first frequency $(f_x)$, and of a second oscillating circuit (3) with the resistance (35) which is independent of the temperature to be measured as a component and delivering the signal having the second frequency $(f_r)$, said two oscillating circuits being separate while operating simultaneously, being of the same construction except for the fact that the second oscillating circuit has a resistance which is independent of the temperature to be measured instead of the variable resistance provided in the first oscillating circuit, being located close one to the other and connected to the same power supply, and consequently being in the same physical conditions so that a variation of said physical conditions causes a parallel drift in both said oscillating circuits

and in that:

the input of the second computer means (18) is connected to the output of the second oscillating circuit for controlling said defined period of time by using the second frequency $(f_r)$, so that the number of said cycles which is counted be representative of the temperature to be measured.

2. A thermometer according to claim 1, characterized in that it comprises:

i) means (42, 55, 56, 57) for resetting the first (16) and second (18) computer means;

ii) a memory (21) for storing at the end of said periods of time the number of cycles.

iii) display means (23) for displaying said number of cycles stored in said memory (21), said stored numbers being preferably converted into units of a recognized scale;

iv) a comparator (20) for sequentially comparing the number of cycles stored in the memory with the number of cycles measured in succession, said comparator comprising means for replacing the number of cycles stored in the memory by the number of cycles measured in succession when the latter exceeds the former, so that the thermometer functions as a maximum thermometer.

# FIG.1

# FIG.3

# FIG.4

# FIG. 2